## Europäisches Patentamt

(19) **European Patent Office**

**Office européen des brevets**

(11) Veröffentlichungsnummer: **0 021 251**
**B1**

(12) # EUROPÄISCHE PATENTSCHRIFT

(45) Veröffentlichungstag der Patentschrift:
**01.02.84**

(51) Int. Cl.³: **H 01 Q 21/28,** H 01 Q 19/13,
G 01 S 13/02

(21) Anmeldenummer: **80103251.7**

(22) Anmeldetag: **11.06.80**

(54) **Pillbox-Radarantenne mit integrierter IFF-Antenne.**

(30) Priorität: **21.06.79 DE 2925104**

(43) Veröffentlichungstag der Anmeldung:
**07.01.81 Patentblatt 81/1**

(45) Bekanntmachung des Hinweises auf die Patenterteilung:
**01.02.84 Patentblatt 84/5**

(84) Benannte Vertragsstaaten:
**BE FR GB IT NL**

(56) Entgegenhaltungen:
**FR - A - 2 366 711**
**FR - A - 2 387 528**
**US - A - 2 638 546**
**US - A - 3 427 621**

(73) Patentinhaber: **SIEMENS AKTIENGESELLSCHAFT,**
**Berlin und München Wittelsbacherplatz 2,**
**D-8000 München 2 (DE)**

(72) Erfinder: **Brunner, Anton, Dipl.-Ing., Nussbaumstrasse 2,**
**D-8136 Wangen (DE)**

BUNDESDRUCKEREI BERLIN

Pillbox-Radarantenne mit integrierter IFF-Antenne

Die Erfindung bezieht sich auf eine als Pillbox-Antenne ausgebildete Radarantenne mit integrierter IFF-Antenne (IFF=identification-friend-foe=Freund-Feind-Identifizierung), welche eine aus mehreren Strahlerelementen zusammengesetzte Strahlergruppe ist.

Aus US-A-3 427 621 ist eine Primärradarantenne bekannt, deren Reflektor als Rotationsparaboloidausschnitt ausgebildet und auf die eine aus einer Einzelstrahlergruppe bestehende Balkenantenne für IFF-Signale getrennt und abgesetzt davon aufmontiert ist.

Primärradar- und IFF-Antennen lassen sich baulich auch getrennt z. B. als Pillbox-Antenne und IFF-Balkenantenne ausführen und dann beispielsweise räumlich übereinander kombinieren. Es ist auch eine Balkenantenne mit einer seriengespeisten Radarantenne und einem integrierten IFF-Balken bekannt. Der Nachteil einer seriengespeisten Radarantenne, z. B. einer Hohlleiterschlitzantenne, besteht in der Schmalbandigkeit und insbesondere in der Frequenzabhängigkeit der Hauptstrahlrichtung.

Aus FR-A-2 387 528 ist eine kompakte und niedrige Pillbox-Primärradarantenne bekannt, in deren Inneres eine IFF-Strahlergruppe eingebaut ist. Diese IFF-Strahlergruppe besteht aus vertikalen, zwischen den beiden Begrenzungsplatten der Pillbox-Antenne angebrachten Einzelstrahlerstäben, die sich im wesentlichen über den gesamten Pillbox-Antennen-Aperturbereich verteilen und in ihrer Gesamtheit als Querstrahler wirken. Wird kein die IFF-Strahlung reflektierendes Polarisationsgitter verwendet, so ergeben sich ungünstige IFF-Strahlungseigenschaften wegen Überlagerung der direkten und der am Pillbox-Parabolreflektor reflektierten IFF-Strahlung. Wird ein als Reflektor für IFF-Strahlung dienendes Polarisationsgitter eingebaut, dann ergeben sich erhebliche Einschränkungen bei der Wahl der Polarisation für das Primärradar bzw. für das IFF. Im übrigen treten starke Abschattungen der Primärradarabstrahlung wegen des Vorbaus der IFF-Strahler sowie gegebenenfalls des Polarisationsgitters auf. Von Nachteil bei dieser bekannten Antenne ist insbesondere, daß sie weder bei Primärradar noch bei IFF in der vertikalen Ebene besonders bündelt.

Aufgabe der Erfindung ist es, eine sehr kompakte, niedrige Radarantenne mit einer integrierten IFF-Antenne zu schaffen, welche für eine Unterbringung auf kleinen Fahrzeugen geeignet ist und in der horizontalen Ebene innerhalb einer größeren Frequenzbandbreite optimale Eigenschaften aufweist, aber auch in der vertikalen Ebene sowohl beim Primärradar als auch bei IFF stärker bündelt. Darüber hinaus sollen auch keinerlei Einschränkungen bei der Wahl der Strahlungspolarisationen für das Primärradar bzw. für das IFF wegen evtl. Abhängigkeiten bestehen und keine Verminderungen der Abstrahlungseigenschaften beim Primärradar aufgrund von abschattenden Primär- sowie IFF-Strahlern und beim IFF aufgrund störender Reflexionswirkungen auftreten.

Gemäß der Erfindung, die sich auf eine Radarantenne der eingangs genannten Art bezieht, wird diese Aufgabe dadurch gelöst, daß die IFF-Strahlergruppe auf der Oberseite der Pillbox-Antenne angebracht ist und aus Strahlerelementen besteht, die in einer Zeile oder in zwei oder mehr parallel zueinander verlaufenden Zeilen angeordnet sind, und zwar derart, daß die Strahlergruppe als Längsstrahler wirksam ist, daß die Pillbox-Antenne doppelstöckig ausgebildet ist, derart, daß sie aus einem zylindrischen Parabolreflektor und zwei senkrecht dazu angeordneten, zueinander parallel verlaufenden Platten mit einer parallel zu diesen beiden Platten verlaufenden, jedoch nicht bis zum Parabolreflektor reichenden Zwischenplatte besteht, so daß sich zu den beiden Seiten dieser Zwischenplatte ein Plattenzwischenraum ergibt, daß ein Radarsignal-Primärstrahler mit seinem Strahlungszentrum in der Brennlinie des zylindrischen Parabolreflektors im unteren Plattenzwischenraum angeordnet ist, daß entlang des zylindrischen Parabolreflektors eine Einrichtung zur Umlenkung der Strahlung von einem in den anderen Plattenzwischenraum vorgesehen ist, und daß sich derjenige Plattenzwischenraum, in welchem sich der Radar-Primärstrahler nicht befindet, nach außen hin trichterförmig öffnet.

Eine doppelstöckige (gefaltete) Pillbox-Antenne ist an sich beispielsweise aus US-A-2 638 546 bekannt. Sie weist den Vorteil auf, daß die Apertur nicht durch den Primärstrahler teilweise abgeschattet wird.

Die trichterförmige Öffnung der doppelstöckigen Pillbox-Antenne ermöglicht eine gewünschte vertikale Bündelung der Primärradarstrahlung.

Aufgrund der Längsstrahlercharakteristik der IFF-Strahlergruppe wird die IFF-Hauptkeule nicht nur in der horizontalen Ebene, sondern auch in der vertikalen Ebene stärker gebündelt. Es ist somit bei der kombinierten Antennenanordnung nach der Erfindung eine einander gleichende Primärradar- bzw. IFF-Vertikalbündelung ermöglicht.

Die Strahlerelemente können beispielsweise durch Schlitze gebildet werden, welche in einer zur Oberseite der Pillbox-Antenne zumindest angenähert parallel verlaufenden metallischen Fläche angebracht sind und somit eine Flachantenne bilden. Die Schlitze können durch eine Triplate- oder Microstrip-Leitung erregt werden, so daß die Phase an den Schlitzen eine nahezu tangentiale Hauptstrahlrichtung verursacht. Im Rahmen des Streifenleitungszuges ist in zweckmäßiger Weise eine Schaltung zur Bildung — wie bekannt (FR-A-2 387 528) — des Summen- und des Differenzsignals aus den Signalen der beiden durch zwei Schlitzzeilen gebildeten IFF-Strahler vorgesehen. Durch eine Vorrichtung zur Änderung des Anstellwinkels zwischen der Flachantenne und der Oberseite der Pillbox-Antenne läßt sich die Hauptstrahlrichtung der IFF-Antenne hinsichtlich des Elevationswinkels einstellen.

Anstelle von Schlitzen lassen sich die IFF-Strahlerelemente auch durch senkrecht auf der Oberseite der Pillbox-Antenne angebrachte Unipolstäbe realisieren, von denen in jeder Zeile nur einer gespeist ist und die übrigen parasitäre Strahlerelemente sind. Die Unipoleinspeisung sowie wiederum eine Schaltung zur Bildung des Summen- und Differenzsignals aus den Signalen der beiden durch zwei Unipolstabzeilen gebildeten IFF-Strahler lassen sich mittels einer in das Gehäuse der Pillbox-Antenne integrierten Koaxialleitung verwirklichen.

Die Erfindung wird im folgenden anhand von vier Figuren näher erläutert. Es zeigt

Fig. 1 und 2 in einer Draufsicht bzw. einer geschnittenen Seitenansicht die Kombination einer Doppelstock-Pillbox-Antenne für Radarsignale mit einer IFF-Flachantenne und

Fig. 3 und 4 in einer Draufsicht bzw. in einer geschnittenen Seitenansicht die Kombination einer doppelstöckigen Pillbox-Antenne für die Radarsignale mit einer zweizeiligen Unipolgruppe zur Abstrahlung der IFF-Signale.

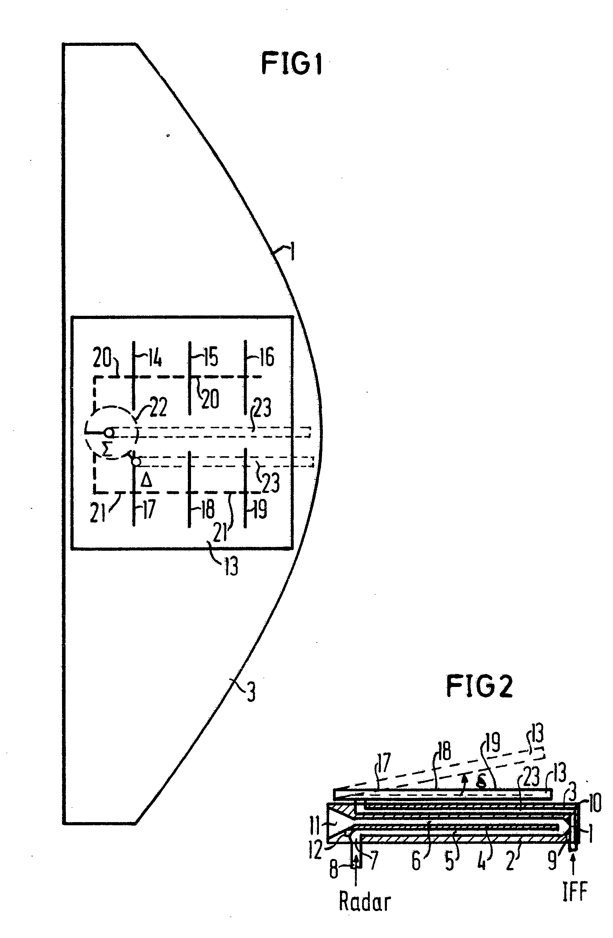

Die in den Figuren 1 und 2 dargestellte doppelstöckige Pillbox-Antenne besteht aus einem zylindrischen Parabolreflektor 1 und zwei senkrecht dazu angeordneten, zueinander parallel verlaufenden metallischen Platten 2 und 3 mit einer Zwischenplatte 4, die jedoch nicht bis zum Parabolreflektor 1 reicht. Die Zwischenplatte 4 verläuft parallel zu den beiden Platten 2 und 3. Zu beiden Seiten der Zwischenplatte 4 ergibt sich jeweils ein Plattenzwischenraum 5 bzw. 6. In der Brennlinie des Parabolreflektors 1 ist mit seinem Strahlungszentrum ein Radarsignal-Primärstrahler 7 im Plattenzwischenraum 5 angeordnet. Der Radarsignal-Primärstrahler 7 läßt sich beispielsweise als offener Hohlleiter oder als ein kleiner Hornstrahler, z. B. ein Umlenkhornstrahler wie in F i g. 1 bis 4, ausbilden. Das von einer Zuführung 8 kommende Radarsignal wird somit über den Primärstrahler 7 in den unteren Plattenzwischenraum 5 eingekoppelt. Der Strahlungsübergang vom unteren Plattenzwischenraum 5 in den oberen Zwischenraum 6 erfolgt in der Anordnung nach Fig. 1 und 2 mit Hilfe von zwei 45°-Abschrägungen 9 und 10 in der Querschnittskontur des zylindrischen Parabolreflektors 1. Die Strahlungsumlenkung kann auch durch einen einfachen Schlitz zwischen der Zwischenplatte 4 und dem zylindrischen Parabolreflektor 1 erfolgen. Die Zwischenplatte 4 kann z. B. in einer am zylindrischen Parabolreflektor 1 entlang verlaufenden, aus dielektrischem Material bestehenden Halterung befestigt werden. Eine derartige Halterung der Zwischenplatte 4 ist der Verwendung von diskreten Abstandsstiften unter Umständen vorzuziehen, da durch solche Stifte störende Inhomogenitätsstellen hervorgerufen werden können. Vor der Apertur des oberen Zwischenraumes 6 ist eine trichterförmige Öffnung 11 vorgesehen, um die gewünschte vertikale Bündelung der Radarsignalstrahlung zu ermöglichen. Der untere Plattenzwischenraum 5 ist an der zum zylindrischen Parabolreflektor 1 abgewandten Seite mit einer metallischen Rückwand 12 abgeschlossen.

Die mit der Radarantenne integrierte IFF-Antenne wird als Flachantenne 13 auf der Pillbox-Antenne oben auf der oberen Platte 3 angebracht. In dieser Flachantenne 13 sind zwei zueinander parallel verlaufende Zeilen mit Schlitzen 14, 15, 16 bzw. 17, 18, 19 vorgesehen, wobei die Schlitze quer zur Hauptstrahlungsrichtung der Pillbox-Antenne verlaufen. Die Schlitze 14 bis 19 werden durch eine Triplate- oder Microstrip-Leitung 20, 21 erregt, derart, daß ihre Phase eine nahezu tangentiale Hauptstrahlrichtung verursacht. Im Rahmen des Streifenleitungszuges ist eine Schaltung 22 zur Bildung des Summen- und des Differenzsignals $\Sigma$ bzw. $\Delta$ aus den Signalen der durch die zwei Schlitzzeilen gebildeten IFF-Strahler vorgesehen. Eine Vorrichtung zur Änderung des Anstellwinkels $\delta$ zwischen der Flachantenne 13 und der Oberseite der Pillbox-Antenne ermöglicht unterschiedliche Neigungen der Flachantenne 13, so daß die Hauptstrahlrichtung abgesenkt werden kann. Im Pillbox-Gehäuse lassen sich Zuleitungen 23 zur Einspeisung der Summen- und Differenzsignale für die Schaltung 22 integrieren. Aufgrund der Längsstrahlercharakteristik, welche durch die axiale Anordnung der strahlenden Elemente, d. h. der Schlitze 14 bis 19 entsteht, wird die IFF-Hauptkeule nicht nur in der horizontalen Ebene, sondern auch in der vertikalen Ebene stärker gebündelt.

Die in den F i g. 3 und 4 dargestellte integrierte Radar/IFF-Antenne weist zur Abstrahlung der Radarsignale eine Pillbox-Antenne auf, welche derjenigen nach den Fig. 1 und 2 entspricht. Es kann deswegen auf die Beschreibung der Pillbox-Antenne verzichtet werden.

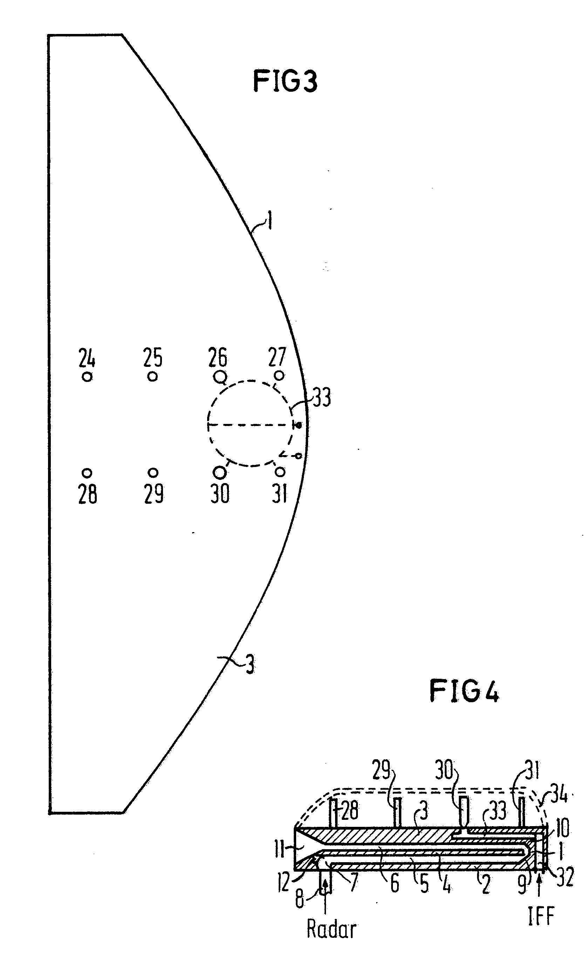

Die Strahlerelemente der IFF-Antenne werden durch senkrecht auf der Oberseite der Pillbox-Antenne angebrachte Unipolstäbe 24 bis 31 gebildet. Dabei sind die Stäbe 24 bis 27 in einer Zeile und die Stäbe 28 bis 31 in einer anderen, dazu parallelen Zeile angeordnet. In jeder Zeile ist nur ein Unipolstab 26 bzw. 30 gespeist. Die übrigen Unipolstäbe sind lediglich parasitäre Strahlerelemente mit geeigneten Abständen und Längen und dienen als Direktoren 24, 25 bzw. 28, 29 und Reflektoren 27 bis 31 zur Erhöhung der Richtwirkung. Die Speisung der Unipolstäbe 26 und 30 erfolgt durch eine in das Pillbox-Gehäuse integrierte Koaxialleitung 32. Außerdem ist eine Schaltung 33 zur Bildung des Summen- und Differenzsignals aus den Signalen der beiden durch die beiden Unipolstabzeilen gebildeten IFF-Strahler vorgesehen, die ebenfalls mittels einer in das Gehäuse der Pillbox-Antenne integrierten Koaxialleitung gebildet ist. Als mechanischer und klimatischer Schutz kann beispielsweise eine Kunststoff-Abdeckung 34 entweder über die gesamten Stäbe 24 bis 31 oder flossenartig jeweils über die Stabzeilen angebracht werden. Auch die entsprechend Fig. 3 und 4 integrierte IFF-Antenne, welche als Yagi-artige Unipolgruppe aufgebaut ist, weist Längsstrahlercharakteristik auf und bündelt die Hauptkeule in beiden Ebenen.

**Patentansprüche**

1. Als Pillbox-Antenne (3) ausgebildete Radarantenne mit integrierter IFF-Antenne (13) (IFF =identification-friend-foe = Freund-Feind-Identifizierung), welche eine aus mehreren Strahlerelementen (14–19; 24–31) zusammengesetzte Strahlergruppe ist, dadurch gekennzeichnet, daß die IFF-Strahlergruppe auf der Oberseite der Pillbox-Antenne angebracht ist und aus Strahlerelementen besteht, die in einer Zeile oder in zwei oder mehr parallel zueinander verlaufenden Zeilen (14–16, 17–19; 24–27, 28–31) angeordnet sind, und zwar derart, daß die Strahlergruppe als Längsstrahler wirksam ist, daß die Pillbox-Antenne (in an sich bekannter Weise) doppelstöckig ausgebildet ist, derart, daß sie aus einem zylindrischen Parabolreflektor (1) und zwei senkrecht dazu angeordneten, zueinander parallel verlaufenden Platten (2, 3) mit einer parallel zu diesen beiden Platten verlaufenden, jedoch nicht bis zum Parabolreflektor (1) reichenden Zwischenplatte (4) besteht, so daß sich zu beiden Seiten dieser Zwischenplatte (4) ein Plattenzwischenraum (5, 6) ergibt, daß ein Radarsignal-Primärstrahler (7) mit seinem Strahlungszentrum in der Brennlinie des zylindrischen Parabolreflektors (1) im unteren Plattenzwischenraum (5) angeordnet ist, daß entlang des zylindrischen Parabolreflektors (1) eine Einrichtung zur Umlenkung der Strahlung von einem (5) in den anderen Plattenzwischenraum (6) vorgesehen ist, und daß sich derjenige Plattenzwischenraum (6), in welchem sich der Radar-Primärstrahler (7) nicht befindet, nach außen hin trichterförmig (11) öffnet.

2. Radarantenne nach Anspruch 1, dadurch gekennzeichnet, daß die Strahlerelemente durch Schlitze (14 bis 19) gebildet sind, welche in einer zur Oberfläche der Pillbox-Antenne zumindest angenähert parallel verlaufenden metallischen Fläche angebracht sind und somit eine Flachantenne (13) bilden.

3. Radarantenne nach Anspruch 2, dadurch gekennzeichnet, daß die Flachantenne in Streifenleitungstechnik, beispielsweise in Triplate- oder Microstrip-Technik, aufgebaut ist, so daß sich die Schlitze (14 bis 19) z. B. durch Triplate- bzw. Microstrip-Leitungen (20, 21) erregen lassen.

4. Radarantenne nach Anspruch 3, dadurch gekennzeichnet, daß im Rahmen des Streifenleitungszuges eine Schaltung (22) zur Bildung des Summen- (Σ) und des Differenzsignals (Δ) aus den Signalen der beiden durch zwei Schlitzzeilen (14, 15, 16 und 17, 18, 19) gebildeten IFF-Strahler vorgesehen ist.

5. Radarantenne nach einem der Ansprüche 2 bis 4, dadurch gekennzeichnet, daß eine Vorrichtung zur Änderung des Anstellwinkels (δ) zwischen der Flachantenne (13) und der Oberseite der Pillbox-Antenne vorgesehen ist.

6. Radarantenne nach Anspruch 1, dadurch gekennzeichnet, daß die Strahlerelemente durch senkrecht auf der Oberseite der Pillbox-Antenne angebrachte Unipolstäbe (24 bis 31) gebildet sind, von denen in jeder Zeile nur einer (26, 30) gespeist ist und die übrigen (24, 25, 27, 28, 29, 31) parasitäre Strahlerelemente sind.

7. Radarantenne nach Anspruch 6, dadurch gekennzeichnet, daß die Unipolstabspeisung sowie eine Schaltung (33) zur Bildung des Summen- und Differenzsignals aus den Signalen der beiden durch zwei Unipolstabzeilen gebildeten IFF-Strahler mittels einer in das Gehäuse der Pillbox-Antenne integrierten Koaxialleitung (32) gebildet sind.

8. Radarantenne nach Anspruch 6 oder 7, dadurch gekennzeichnet, daß eine Kunststoffabdeckung (34) über die Gesamtheit der Unipolstäbe (24 bis 31) angebracht ist.

9. Radarantenne nach Anspruch 6 oder 7, dadurch gekennzeichnet, daß Kunststoffabdeckungen (34) flossenartig über den einzelnen Unipolstabzeilen (24 bis 27 und 28 bis 31) angebracht sind.

10. Radarantenne nach einem der vorhergehenden Ansprüche, dadurch gekennzeichnet, daß der Radarsignal-Primärstrahler (7) ein Hornstrahler, z. B. ein Umlenkhornstrahler, ist.

11. Radarantenne nach einem der vorhergehenden Ansprüche, dadurch gekennzeichnet, daß der Radarsignal-Primärstrahler (7) ein offener Hohlleiter ist.

12. Radarantenne nach einem der vorhergehenden Ansprüche, dadurch gekennzeichnet, daß die Einrichtung zur Strahlungsumlenkung vom einen zum anderen Plattenzwischenraum (5, 6) in einem Schlitz besteht, welcher sich dadurch ergibt, daß die Zwischenplatte (4) nicht ganz bis zum zylindrischen Parabolreflektor (1) reicht.

13. Radarantenne nach einem der Ansprüche 1 bis 11, dadurch gekennzeichnet, daß die Einrichtung zur Strahlungsumlenkung vom einen zum anderen Plattenzwischenraum (5, 6) durch zwei 45°-Abschrägungen (9, 10) in der Querschnittskontur des zylindrischen Parabolreflektors (1) gebildet ist.

14. Radarantenne nach einem der vorhergehenden Ansprüche, dadurch gekennzeichnet, daß die Zwischenplatte (4) in einer am zylindrischen Parabolreflektor (1) entlang verlaufenden, aus dielektrischem Material bestehenden Halterung befestigt ist.

15. Radarantenne nach einem der vorhergehenden Ansprüche, dadurch gekennzeichnet, daß derjenige Plattenzwischenraum (5), in dem sich der Radarsignal-Primärstrahler (7) befindet, an der zum Parabolreflektor (1) entgegengesetzt liegenden Seite mit einer metallischen Rückwand (12) abgeschlossen ist.

## Claims

1. A radar antenna designed as a pillbox antenna (3) with an integrated IFF antenna (13) (IFF=identification-friend-foe) composed of a group of radiator elements (14—19; 24—31), characterised in that the IFF radiator group is fixed at the top of the pillbox antenna and consists of radiator elements arranged in one row or in two or more mutually parallel rows (14—16, 17—19; 24—27, 28—31), in such a manner that the radiator group is effective as a longitudinal radiator, and that the pillbox antenna is designed to have two levels, (in a manner known per se) with a cylindrical parabolic reflector (1) and two plates (2, 3) arranged at right angles thereto and mutually parallel with an intermediate plate (4) which is parallel to said two plates, but does not extend to the parabolic reflector (1), so that there is a plate interspace (5, 6) formed on both sides of this intermediate plate (4), and that a radar signal primary reflector (7) having its radiation centre in the focal line of the cylindrical parabolic reflector (1) is arranged in the lower plate interspace (5), and that there is arranged along the cylindrical parabolic reflector (1) a device for deflecting the radiation from one plate interspace (5) into the other one (6), and that the plate interspace (6), in which the primary radar reflector (7) is not present, opens outwardly in a funnel-shaped fashion (11).

2. A radar antenna as claimed in Claim 1, characterised in that the radiator elements are formed by slots (14 to 19), arranged in a metallic surface running at least approximately parallel to the upper surface of the pillbox antenna, to form a flat antenna (13).

3. A radar antenna as claimed in Claim 2, characterised in that the flat antenna is constructed in stripline technology, for example, in triplate or microstrip technology, so that the slots (14 to 19) can be excited for example by triplate or microstrip lines (20, 21), as the case may be.

4. A radar antenna as claimed in Claim 3, characterised in that there is arranged within the scope of the stripline a circuit (22) which serves to form the sum signal ($\Sigma$) and the difference signal ($\Delta$) from the signals of the two IFF radiators formed by the slot rows (14, 15, 16 and 17, 18, 19).

5. A radar antenna as claimed in one of Claims 2 to 4, characterised in that there is provided a device for changing the angle of incidence ($\delta$) between the flat antenna (13) and the top of the pillbox antenna.

6. A radar antenna as claimed in Claim 1, characterised in that the radiator elements are formed by unipole rods (24 to 31) fixed at the top of the pillbox antenna of which only one (26, 30) in each row is fed and the remaining ones (24, 25, 27, 28, 29, 31) are parasitic radiator elements.

7. A radar antenna as claimed in Claim 6, characterised in that unipole rod feeding and a circuit (33) which serves to form the sum signal and difference signal from the signals of two unipole rod rows forming IFF radiators are formed by means of a coaxial line (32) integrated into the housing of the pillbox antenna.

8. A radar antenna as claimed in Claim 6 or 7, characterised in that a plastic cover (34) is applied over the entirety of the unipole rods (24 to 31).

9. A radar antenna as claimed in Claim 6 or 7, characterised in that plastic covers (34) are applied over the individual unipole rod rows (24 to 27 and 28 to 31) in a fin shaped fashion.

10. A radar antenna as claimed in one of the preceding claims, characterised in that the radar signal primary radiator (7) is a horn radiator, e.g. a folded horn radiator.

11. A radar antenna as claimed in one of the preceding Claims, characterised in that the radar signal primary radiator (7) is an open waveguide.

12. A radar antenna as claimed in one of the preceding claims, characterised in that the device which serves to deflect the radiation from one plate interspace to the other (5, 6) is a slot formed by the fact that the intermediate plate (4) does not completely extend to the cylindrical parabolic reflector (1).

13. A radar antenna as claimed in one of Claims 1 to 11, characterised in that the device which serves to deflect the radiation from one plate interspace to the other (5, 6) is formed by two 45°-slopes (9, 10) in the cross-sectional contour of the cylindrical parabolic reflector (1).

14. A radar antenna as claimed in one of the preceding claims, characterised in that the intermediate plate (4) is fixed in a holder of a dielectric material extending along the cylindrical parabolic reflector (1).

15. A radar antenna as claimed in one of the preceding claims, characterised in that the plate interspace (5) on the side opposite the parabolic reflector (1), wherein the radar signal primary radiator (7) is present, is connected to a metallic back wall (12).

## Revendications

1. Antenne radar réalisée sous la forme d'une antenne Pillbox (3), comportant une antenne IFF intégrée (13) (IFF=identification-friend-foe=identification ami-ennemi), qui est un groupe d'émetteurs formé par la réunion de plusieurs émetteurs (14—19; 24—31), caractérisée par le fait que le groupe d'émetteurs IFF est monté sur la face supérieure de l'antenne Pillbox et est consitué par des émetteurs qui sont disposés suivant une ligne ou suivant deux ou plusieurs lignes parallèles entre elles (14—16, 17—19; 24—27, 28—31), et ce de telle manière que le groupe d'émetteurs est actif en tant qu'émetteur à rayonnement longitudinal, que l'antenne Pillbox est réalisée (de façon connue en soi) à deux étages de telle sorte qu'elle est constituée par un réflecteur parabolique cylindrique (1) et par deux plaques (2, 3) perpendiculaires à ce réflecteurs et parallèles l'une à l'autre, avec une plaque intercalaire (4) s'étendant parallèlement à ces deux plaques mais n'atteignant pas le réflecteur parabolique (1), de sorte que des deux côtés de cette plaque intercalaire (4) se trouve formé un espace intercalaire (5, 6) entre plaques, qu'un émetteur primaire de signaux radar (7) est disposé de sorte que son centre de rayonnement est situé sur l'axe focal du récepteur parabolique cylindrique (1) dans l'espace intercalaire inférieur (5) entre plaques, qu'il est prévu, le long du réflecteur parabolique cylindrique (1), un dispositif servant à envoyer le rayonnement d'un espace intercalaire (5) entre plaques dans l'autre espace intercalaire (6), et que l'espace intercalaire entre plaques (6), dans lequel l'émetteur primaire (7) du radar n'est pas situé, s'ouvre vers l'extérieur sous la forme d'un entonnoir (11).

2. Antenne radar suivant la revendication 1, caractérisée par le fait que les émetteurs sont formés par des fentes (14 à 19), qui sont disposées dans une surface métallique s'étendant au moins approximativement parallèlement à la face supérieure de l'antenne Pillbox et forment par conséquent une antenne plate (13).

3. Antenne radar suivant la revendication 2, caractérisée par le fait que l'antenne plate est réalisée suivant la technique des conducteurs en forme de bande, par exemple suivant la technique Triplate ou Microstrip, de sorte que les fentes (14 à 19) peuvent être excitées par exemple par des conducteurs Triplate ou Microstrip (20, 21).

4. Antenne radar suivant la revendication 3, caractérisée par le fait que dans le cadre du tracé du conducteur en forme de bande il est prévu un circuit (22) servant à former le signal somme ($\Sigma$) et le signal différence ($\Delta$) à partir des signaux des deux émetteurs IFF formés par deux lignes de fentes (14, 15, 16 et 17, 18, 19).

5. Antenne radar suivant l'une des revendications 2 à 4, caractérisée par le fait qu'il est prévu un dispositif pour modifier l'angle d'inclinaison ($\delta$) entre l'antenne plate (13) et la face supérieure de l'antenne Pillbox.

6. Antenne radar suivant la revendication 1, caractérisée par le fait que les émetteurs sont formés par des tiges unipolaires (24 à 31) montées perpendiculairement sur la face supérieure de l'antenne Pillbox et dont seul un émetteur (26, 30) dans chaque ligne est alimenté, tandis que les autres émetteurs (24, 25, 27, 28, 29, 31) sont des émétteurs parasites.

7. Antenne radar suivant la revendication 6, caractérisée par le fait que l'alimentation des tiges unipolaires ainsi qu'un circuit (33) pour la formation du signal somme et du signal différence à partir des signaux des deux émetteurs IFF formés par deux lignes de tiges unipolaires sont réalisés au moyen d'un conducteur coaxial (32) intégré dans le boîtier de l'antenne Pillbox.

8. Antenne radar suivant la revendication 6 ou 7, caractérisée par le fait qu'un capot en matière plastique (34) est monté au-dessus de l'ensemble des tiges unipolaires (24, 31).

9. Antenne radar suivant la revendication 6 ou 7, caractérisée par le fait que des capots en matière plastique (34) sont montés, à la manière d'un aileron, au-dessus de différentes lignes de tiges unipolaires (24 à 27 et 28 à 31).

10. Antenne radar suivant l'une des revendications précédentes, caractérisée par le fait que l'émetteur primaire de signaux radar (7) est un cornet rayonnant, par exemple un cornet rayonnant de renvoi.

11. Antenne radar suivant l'une des revendications précédentes, caractérisée par le fait que l'émetteur priamire de signaux radar (7) est un guide d'ondes ouvert.

12. Antenne radar suivant l'une des revendications précédentes, caractérisée par le fait que le dispositif servant au renvoi du rayonnement depuis un espace intercalaire vers l'autre expace intercalaire entre plaques (5, 6) est constitué par une fente qui est obtenue par le fait que la plaque intercalaire (4) ne s'étend pas jusqu'au réflecteur parabolique cylindrique (1).

13. Antenne radar suivant l'une des revendications 1 à 11, caractérisée par le fait que le dispositif servant au renvoi du rayonnement d'un espace intercalaire à l'autre espace intercalaire entre plaques (5, 6) est formé par des biseaux à 45° (9, 10) ménagés dans le contour de la section transversale du réflecteur parabolique cylindrique (1).

14. Antenne radar suivant l'une des revendications précédentes, caractérisée en ce que la plaque intercalaire (4) est fixée dans un support constitué en un matériau diélectrique et s'étendant le long du réflecteur parabolique cylindrique (1).

15. Antenne radar suivant l'une des revendications précédentes, caractérisée par le fait que l'espace intercalaire entre plaques (5), dans lequel est situé l'émetteur primaire de signaux radar (7), est fermé par une paroi arrière métallique (12) sur le côté situé à l'opposé du réflecteur parabolique (12).

## FIG1

## FIG2

Radar

IFF

## FIG3

## FIG4

Radar

IFF